(19) Europäisches Patentamt
European Patent Office
Office européen des brevets

(11) **EP 0 524 034 B1**

(12) **FASCICULE DE BREVET EUROPEEN**

(45) Date de publication et mention
de la délivrance du brevet:
**25.09.1996 Bulletin 1996/39**

(51) Int Cl.6: **C09K 11/83**, C01B 25/37,
C01B 25/45

(21) Numéro de dépôt: **92401453.3**

(22) Date de dépôt: **27.05.1992**

(54) **Phosphate mixte de lanthane, terbium et cerium, procédé de fabrication de celui-ci à partir de sels insolubles de terres rares**

Lanthan-Terbium- und Ceriumphosphat-Gemisch, Verfahren zur Herstellung desselben aus unlöslichen Seltenerdensalzen

Mixed lanthanum terbium and cerium phosphate, process for its preparation from insoluble rare earth salts

(84) Etats contractants désignés:
**AT BE CH DE DK ES FR GB GR IT LI LU NL PT SE**

(30) Priorité: **19.07.1991 FR 9109142**

(43) Date de publication de la demande:
**20.01.1993 Bulletin 1993/03**

(73) Titulaire: **RHONE-POULENC CHIMIE
92408 Courbevoie Cédex (FR)**

(72) Inventeurs:
- **Collin, Marie-Pierre
  F-93800 Epinay Sur Seine (FR)**
- **Le Govic, Anne-Marie
  F-75010 Paris (FR)**
- **Huguenin, Denis
  F-92300 Levallois (FR)**

(74) Mandataire: **Dubruc, Philippe et al
RHONE-POULENC CHIMIE,
Direction de la Propriété Industrielle,
25, Quai Paul Doumer
92408 Courbevoie Cédex (FR)**

(56) Documents cités:
**US-A- 4 423 349**

- **DATABASE WPIL Section Ch, Week 47, Derwent Publications Ltd., London, GB; Class L03, AN 84-291413**
- **DATABASE WPIL Section Ch, Week 38, Derwent Publications Ltd., London, GB; Class L03, AN 82-80569E**

## Description

La présente invention concerne les phosphates mixte de terres rares utiles notamment pour la fabrication de luminophore.

Elle se rapporte plus particulièrement à un phosphate mixte de lanthane, cérium et terbium utile notamment comme précurseur de luminophore vert et un procédé de fabrication de celui-ci, à partir de sels de terres rares insolubles dans l'eau.

Dés 1970, il a été découvert que des phospshates mixtes de terres rares et notamment de lanthane, cérium et terbium présentent une propriété de luminescence intéressante. Ainsi, il a été développé de nombreux phosphates de lanthane, cérium, terbium, appelés également "phosphates de LaCeTb" avec différentes concentrations en lanthane, cérium et terbium.

Il a également été proposé des procédés de fabrication de ceux-ci qui peuvent être classés en deux grandes catégories :

- procédés par "voie sèche"
- et procédés par "voie humide".

Les procédés par voie sèche, notamment décrit dans les brevets **JP 62007785, WO 8204438, JP 62089790, JP 59179578, JP 62000579** consistent à former un mélange des oxydes de terres rares ou à prendre un oxyde mixte de terres rares ou un oxalate mixte de terres rares et à réaliser une phosphatation de ce mélange ou composé mixte par calcination en présence de phosphate diammonique. Les oxydes peuvent être obtenus par calcination d'un oxalate mixte de terres rares (JP 62218477).

Les procédés par "voie humide" notamment décrits dans les brevets **JP 57023674, JP 60090287 et JP 32218477** consistent en une synthèse directe d'un phosphate mixte de terres rares ou d'un mélange des phosphates de terres rares par attaque d'un composé solide (carbonate, oxyde) par $H_3PO_4$ pour précipiter les phosphates.

Ainsi, le brevet JP 57023674 réalise la précipitation des phosphates de terres rares par action de l'acide phosphorique sur les carbonates de terres rares en milieu dilué. Le produit obtenu est séché puis calciné à une température de 1150°C pour donner un produit luminescent dans le vert. Ce procédé requiert l'utilisation d'un milieu dilué. De ce fait, il ne pourra être industrialisé car de grands volumes de solution devront être mis en oeuvre pour produire une faible quantité de phosphate de terres rares.

En outre, ces procédés utilisant la précipitation directe de phosphates mixtes de terres rares conduisent à des gels ou précipités se filtrant très mal.

Un des buts de la présente invention est de remédier à ces inconvénients en proposant un procédé de préparation d'un phosphate mixte de terres rares et plus particulièrement de lanthane, cérium et terbium utilisant des milieux concentrés, notamment en ions phosphates, et terres rares et permettant d'obtenir des phosphates mixtes présentant une texture et répartition granulométrique particulières, ainsi que des propriétés de luminescence dans une couleur donnée stable au cours du vieillissement.

A cet effet, l'invention propose un phosphate mixte de lanthane, cérium et terbium de formule générale (I) :

$$La_x \, Ce_y \, Tb_{(1-x-y)}PO_4$$

dans laquelle :

x est compris entre 0,4 et 0,6

x + y est supérieur à 0,8

Ce phosphate mixte est constitué selon l'invention de cristallites en forme d'aiguille.

Après que le phosphate ait subi un traitement thermique à une température au moins supérieure à 600°C, il présente une phase cristalline monoclinique.

Les cristallites ont une longueur comprise entre 50 nm et 200 nm et une largeur comprise entre 10 nm et 50 nm.

Ces cristallites ont une phase hexagonale quand elles sont séchées à une température de 50°C environ.

Le phosphate mixte de l'invention comprend des particules constituées par une agrégation des cristallites en forme d'aiguille. Ces agrégats ont un diamètre moyen, mesuré par SEDIGRAPH 500®, compris entre 1 μm et 15 μm, de préférence entre 2μm et 10 μm.

Selon l'invention, le phosphate mixte de lanthane cerium, terbium, appelé ci-après phosphate de LaCeTb, présente avantageusement un indice de dispersion I de la taille des particules compris entre 0,5 et 0,8 environ.

L'indice de dispersion I est déterminé par la formule :

$$I = \frac{\emptyset_{84} - \emptyset_{16}}{2\emptyset_{50}}$$

Dans laquelle :

$\emptyset_{84}$ est le diamètre des particules pour lequel 84 % des particules ont un diamètre inférieur à $\emptyset_{84}$.

$\emptyset_{16}$ est le diamètre des particules pour lequel 16 % des particules ont un diamètre inférieur à $\emptyset_{16}$.

$\emptyset_{50}$ est le diamètre moyen des particules.

Ainsi, le phosphate de LaCeTb de l'invention présente une distribution granulométrique resserrée, avec des tailles d'agglomérats de cristallites très petites.

Ces caractéristiques sont importantes et recherchées pour la fabrication de luminophores.

Le phosphate de l'invention présente également la caractéristique remarquable d'une forte clarté même après une calcination à une température élevée sous air.

Cette forte clarté est caractéristique d'une faible concentration en cérium IV et terbium IV après calcination sous air. En d'autres termes, le phosphate de La-CeTb de l'invention se caractérisé par le fait que les éléments cérium et terbium à l'état d'oxydation 3+ ne sont pas oxydés à l'état 4+ même par une calcination sous air.

La caractéristique de clarté est démontrée par un test de colorimétrie consistant à déterminer les coordonnées caractéristiques de la couleur du corps dans le système CIE 1976 (L*, a*, b*) définis par la Commission Internationale d'Eclairage, et répertorié dans le Recueil de normes française (AFNOR) couleur colorimétrique n° X08-012 (1983). Ces coordonnées sont déterminées au moyen d'un colorimétre commercialisée par la Société Pacific Scientific.

Ainsi, les phosphates de LaCeTb de l'invention présentent après calcination à 700°C sous air, une clarté, représentée par la coordonnée L*, supérieure à 90 et avantageusement comprise entre 95 et 97.

Cette coordonnée L* permet de mesurer la couleur blanche du produit qui est directement reliée à la présence d'espèces colorées dans le produit tels que du cérium et/ou terbium à l'état d'oxydation 4+.

Les produits de l'invention présentent également des coordonnées de couleur a*, b* comprises respectivement entre - 2 et - 1 ; 5 et 9 environ.

En outre, les produits de l'invention calcinés à une température de 900°C toujours sous atmosphère non réductrice présentent des coordonnées chromatiques remarquables, caractéristiques d'une couleur blanche pratiquement pure :

$$L* > 99$$

$$- 0,7 < a* < - 0,1 \text{ et } 0,5 < b* < 1,5$$

Il est également possible d'apprécier la présence ou l'absence du cérium et/ou terbium à l'état d'oxydation 4+, par une analyse de surface des produits par la technique X.P.S. décrite, notamment, dans la publication PRALINE et COLL. Journal of Electron Spectroscopy and related phenomena, 21 (1980) P. 17 à 30 et 31 à 46.

Ainsi, les produits de l'invention présentent, dans la gamme d'énergie correspondant aux électrons 3D du Cérium, deux doublets caractéristiques de l'état d'oxydation 3+ et l'absence de satellite, situé à 32,7 eV du premier pic, caractéristique d'un degré d'oxydation 4,

L'invention a également pour objet un procédé de fabrication de phosphate mixte de lanthane, cérium et terbium de formule générale I décrite ci-dessus, consistant à réaliser une suspension aqueuse d'un oxalate mixte de lanthane, cérium et terbium insoluble dans l'eau ou d'un mélange d'oxalates de lanthane, cérium ou terbium insolubles dans l'eau, à mélanger cette suspension aqueuse avec un phosphate comprenant au plus une fonction acide non neutralisée, à maintenir ce mélange à une température supérieure à 70°C, puis à séparer le précipité et le sécher éventuellement.

Le produit obtenu après séchage éventuel, est traité thermiquement à une température supérieure à 600°C, avantageusement comprise entre 700°C et 1000°C pour réaliser une transformation de la phase cristalline hexagonale en phase pure monoclinique.

Le produit ainsi traité présente des propriétés de luminescence à une longueur d'onde d'environ 550 nm après exposition à un rayon de longueur d'onde environ 254 nm, c'est à dire dans le vert.

Le milieu réactionnel après mélange des ions phosphates est avantageusement maintenu à une température comprise entre 70° et 100°C.

Il est également préférable de le maintenir sous agitation.

Selon une autre caractéristique de l'invention, le milieu réactionnel est maintenu pendant une durée comprise entre 15 minutes et 24 heures pour permettre à la réaction d'être complète.

La quantité d'ions phosphates mélangés à la suspension est déterminée pour obtenir un rapport $PO_4^{=}$/TR compris entre 1 et 5, de préférence entre 1,5 et 3.

Les phosphates convenables pour l'invention, sont par exemple les phosphates de métaux alcalins ou alcalino-terreux, ou d'ammonium comprenant au plus une fonction acide non neutralisée. Les composés préférés de l'invention sont le phosphate diammonique et le phosphate triammonique.

Ils sont mis en oeuvre soit sous forme solide, soit sous forme de solution aqueuse.

Dans ce dernier cas, la concentration en phosphate est, par exemple, avantageusement comprise entre 50 g/l et 250 g/l.

Les composés insolubles de terres rares préférés de l'invention sont les oxalates de lanthane, cérium ou terbium, ou les oxalates mixtes de deux ou trois de ces éléments.

La suspension aqueuse est réalisée par addition des oxalates de terres rares dans de l'eau selon une concentration molaire totale en terres rares, exprimée en élément, comprise entre 0,1 mole/l et 1,0 mole/l, et avec une répartition des terres rares correspondant aux proportions stoechiométriques du phosphate mixte désiré et défini par la formule (I).

Ainsi, le procédé de l'invention permet d'utiliser un milieu concentré en terres rares et donc permet de produire industriellement des phosphates mixtes de terres rares.

L'ordre d'addition ou de mélange de la suspension avec le composé phosphate n'est pas critique. Toutefois, selon un mode de réalisation préféré de l'invention, le composé phosphate est ajouté dans la suspension de composés insolubles de terres rares.

Selon une autre caractéristique de l'invention, le pH du milieu réactionnel ou mélange est maintenu et contrôlé à une valeur comprise entre 2 et 10, de préférence entre 6 et 9.

Le précipité obtenu est ensuite séparé par tout moyen classique comme, par exemple, la filtration, la décantation ou la centrifugation.

Le procédé de l'invention permet d'obtenir un précipité facilement séparable par filtration.

Le précipité est avantageusement séché, par exemple à une température comprise entre 50°C et 100°C , puis calciné comme indiqué précédemment.

Cette calcination peut être réalisée sous une atmosphère quelconque, par exemple une atmosphère neutre ou oxydante, sans risque d'oxydation des espèces cérium et terbium de l'état 3+ à l'état 4+.

Ainsi, la calcination peut être réalisée sous air, ce qui représente un avantage considérable pour le procédé de fabrication des phosphates de LaCeTb qui étaient généralement obtenus par traitement thermique sous atmosphère réductrice.

Selon l'invention, le phosphate de LaCeTb peut comprendre également d'autres éléments jouant le rôle notamment de promoteur des propriétés de luminescence ou de stabilisateur des degrés d'oxydation des éléments cérium et terbium.

Ces éléments peuvent être ajoutés, par exemple, au moment de la précipitation du phosphate de LaCeTb.

Les propriétés de luminescence du composé calciné ou ses caractéristiques texturales ( granulométrie, forme des particules, par exemple) peuvent être encore améliorées par un traitement thermique avec un "flux".

Ce traitement thermique est classiquement utilisé dans les procédés d'élaboration des luminophores, notamment pour adapter le luminophore à l'utilisation souhaitée.

Ces luminophores, à base de phosphates de LaCeTb sont notamment utilisés dans le domaine des lampes à mercure, à basse pression.

D'autres détails et avantages de l'invention apparaîtront plus clairement au vu des exemples ci-dessous donnés uniquement à titre indicatif.

### Exemple 1

Une suspension d'oxalate mixte de lanthane, cerium et terbium, contient 0,6 mole/l en éléments terres rares et une concentration respective de chacune des terres rares de :

La = 0,25 mole/l
Ce = 0,27 mole/l
Tb = 0,08 mole/l

A cette suspension portée à 100°C, on ajoute une solution contenant du phosphate triammonique à une concentration de 1,8 mole/l.

La quantité de solution est déterminée pour avoir un rapport molaire $PO_4^=/TR$ égal à 3.

Le pH du milieu réactionnel est de 7 en fin d'addition de la solution de phosphate triammonique. Le mélange est maintenu à 100°C pendant 4 heures.

Le phosphate mixte de LaCeTb obtenu a comme formule :

$$La_{0,42} Ce_{0,44} Tb_{0,14} PO_4$$

Après filtration du précipité, lavage avec de l'eau et séchage à 50°C, on obtient une poudre blanche avec un rendement pondéral de 100 % par rapport à l'oxalate mis en oeuvre.

L'analyse difractionnelle aux rayons X montre que le produit à une phase cristalline hexagonale.

L'analyse granulométrique du produit séché montre une répartition granulométrique centrée autour d'une dimension moyenne de particule égale à 1,8 μm avec un indice de dispersion de 0,6.

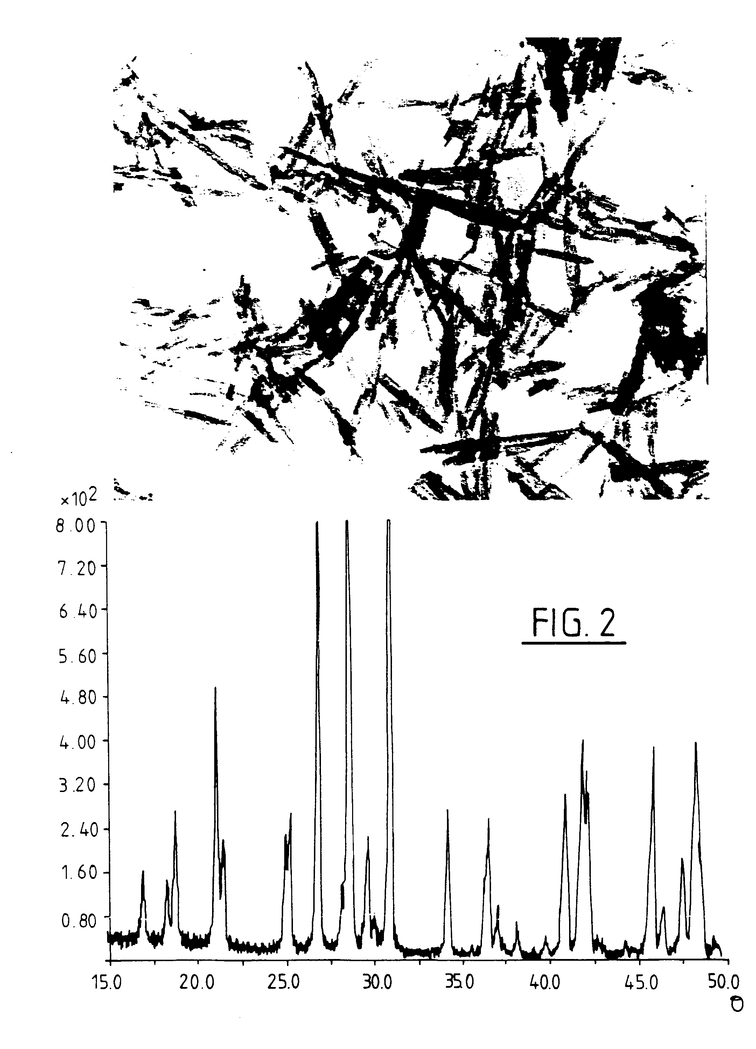

Ces particules sont des agglomérats de cristallites élémentaires en forme d'aiguille de longueur 0,15 μm environ et 0,01 μm de large environ, comme le montre l'analyse au microscope électronique à transmission (Fig. 1).

Cette poudre calciné à 900°C correspond à un orthophosphate de LaCeTb de structure cristalline monoclinique bien cristallisé, comme illustré par le spectre d'analyse aux rayons X de la figure 2.

L'analyse granulométrique du produit calciné montre que le diamètre moyen des particules est de 1,5 μm avec un indice de dispersion de 0,9. Ces particules sont des agglomérats de grains submicroniques de dimension comprise entre 0,1 et 0,4 μm.

### Exemple 2

Cet essai est identique à l'exemple 1 mais la suspension d'oxalates de terres rares contient 0,25 mole/l en élément terre rare, avec le même rapport entre les terres rares entre elles.

Après filtration du précipité, lavage avec de l'eau, on obtient une poudre blanche avec un rendement pondéral de 100 % par rapport à l'oxalate mis en oeuvre.

Le produit obtenu conduit après calcination à 900°C à un orthophosphate de LaCeTb présentant la même structure cristalline que celui de l'exemple 1.

L'analyse granulométrique du produit séché à 50°C montre une répartition granulométrique de diamètre moyen égal à 2,5 μm avec un indice de dispersion de 1.

Le produit calciné est constitué d'agglomérats dont la taille moyenne est du même ordre de grandeur que ceux du produit séché mais ces agglomérats sont constitués de grains élémentaires de taille comprise entre 0,3 et 1 μm.

### Exemple 3

Cet essai est identique à l'exemple 2, à la différence que la solution de phosphate tri-ammonique est ajoutée pour obtenir un rapport $PO_4^{3-}/TR$ égal à 2.

Le produit obtenu séché ou calciné à 900°C présente la même structure cristalline et la même morphologie que celles correspondant au produit séché ou calciné respectivement décrit dans l'exemple 2.

Les coordonnées chromatiques de ce produit après calcination à 700°C sont : L* = 95,7 ; a* = 1,66 et b* = 7,62.

Après calcination à 900°C ces coordonnées sont L* = 99,6 ; a* = - 0,43 et b* = 1,3.

## *Exemple 4*

A la suspension d'oxalate mixte décrite dans l'exemple 1 et portée à 100°C, on ajoute une solution contenant du phosphate diammonique. Le rapport $PO_4^{3-}/TR$ est de 5 et le pH est régulé à 5.

Après un mûrissement de 12 heures, ce mélange est séparé par filtration et lavé à l'eau. On récupère alors avec un rendement pondéral de 100%, une poudre blanche conduisant après un traitement thermique à 900°C à un orthophosphate de LaCeTb de structure monoclinique bien cristallisé.

## *Exemple 5*

A une solution de phosphate triammonique portée à 100°C, on ajoute en 15 minutes une suspension d'oxalare mixte de lanthane, cérium, terbium à une concentration de 0,15 mole/l, le rapport $PO_4^{3-}/TR$ est de 3 et le pH est régulé à 7.

Le mélange est soumis à un mûrissement de 2 heures.

Après séparation et lavage du solide, on récupère avec un rendement pondéral de 100 %, une poudre blanche conduisant après un traitement thermique à 900°C à un orthophosphate de LaCeTb de structure monoclinique bien cristallisé.

La répartition granulométrique du phosphate calciné à 900°C est centrée autour de 3 μm avec un indice de dispersion de 0,9.

## Test de luminescence

Les phosphates de LaCeTb obtenus selon le procédé de l'invention sont analysés pour déterminer leur propriété de luminescence.

La luminescence est déterminée au moyen d'un spectromètre "BENTHAM"® permettant d'obtenir un spectre d'émission de l'échantillon excité avec une lampe à vapeur de mercure basse pression, de longueur d'onde de 254 nm, et le calcul de l'intégrale des intensités d'émission entre deux longueurs d'ondes, appelée "Brillance".

Ces deux longueurs d'ondes sont 540 et 560 mm.

Les résultats obtenus, après traitement thermique des phosphates de LaCeTb des exemples 1 à 5 à une température de 900°C pendant 2 heures sont rassemblés dans le tableau ci-dessous.

| ESSAI | 1 | 2 | 3 | 4 | 5 |
|---|---|---|---|---|---|
| Brillance ( ua ) | 110 | 132 | 143 | 130 | 132 |

## Revendications

1. Phosphate mixte de lanthane, cérium et terbium de formule générale (I) :

$$La_x\ Ce_y\ Tb_{(1-x-y)}\ PO_4$$

dans laquelle :

x est compris entre 0,4 et 0,6
x + y est supérieur à 0,8

caractérisé en ce qu'il est constitué de cristallites en forme d'aiguille ayant une longueur comprise entre 50 nm et 200 nm et une largeur comprise entre 10 nm et 50 nm et en ce qu'il présente, par analyse de surface du type X.P.S., deux doublets dans la gamme d'energie correspondant aux électrons 3D du cérium et une absence de satellite situé à 32,7 ev du premier pic.

2. Phosphate mixte de lanthane, cérium et terbium de formule générale (I) :

$$La_x\ Ce_y\ Tb_{(1-x-y)}\ PO_4$$

dans laquelle :

x est compris entre 0,4 et 0,6
x + y est supérieur à 0,8

caractérisé en ce qu'il est constitué de cristallites en forme d'aiguille ayant une longueur comprise entre 50 nm et 200 nm et une largeur comprise entre 10 nm et 50 nm et présentant, après calcination à une température de 900°C sous air, une clarté (L) mesurée par colorimétrie supérieure à 99.

3. Phosphate selon la revendication 1 ou 2, caractérisé en ce que le diamètre moyen des particules formées par un agrégat de cristallites est compris entre 1μm et 15 μm, de préférence entre 2 μm et 10 μm.

4. Phosphate selon la revendication 3, caractérisé en ce que l'indice de dispersion I de la taille des particules est compris entre 0,5 et 0,8.

5. Phosphate selon l'une des revendication 1 à 4, caractérisé en ce que après calcination à 900°C, les coordonnées a,b sont comprises respectivement entre - 0,7 < a* < - 0,1 et 0,5 < b* < 1,5.

6. Phosphate selon l'une des revendications 1 à 5, caractérisé en ce qu'il comprend au moins un autre élément formant un promoteur de luminescence, ou de stabilisation.

7. Phosphate mixe de lanthane, cérium et terbium à propriétés de luminescence et de formule (I) :

$$La_x Ce_y Tb_{(1-x-y)}PO_4$$

dans laquelle :

x est compris entre 0,4 et 0,6
x + y est supérieur à 0,8

caractérisé en ce qu'il est constitué de cristallites en forme d'aiguille ayant une longueur comprise entre 50 nm et 200 nm et une largeur comprise entre 10 nm et 50 nm et en ce qu'il est obtenu par calcination à une température supérieure à 600°C d'un phosphate selon l'une des revendications précédentes.

8. Procédé de fabrication d'un phosphate mixte selon l'une des revendications 1 à 6, caractérisé en ce qu'il consiste à réaliser une suspension aqueuse d'un oxalate mixte de lanthane, cérium et terbium ou d'un mélange d'oxalates de lanthane, cérium ou terbium, à mélanger cette suspension avec un phosphate comprenant au plus une fonction acide non neutralisée à porter et maintenir la suspension à une température au-dessus de 70°C puis à séparer le précipité et à le sécher éventuellement.

9. Procédé selon la revendication 8, caractérisé en ce que la suspension de sels insolubles de terres rares et d'ions phosphates est maintenue à une température comprise entre 70°C et 100°C.

10. Procédé selon l'une des revendications 8 ou 9, caractérisé en ce que la quantité d'ions phosphates mélangés à la suspension de sels insolubles de terres rares est déterminée pour obtenir un rapport molaire $PO_4^{\equiv}/TR$ compris entre 1 et 5, de préférence entre 1,5 et 3.

11. Procédé selon l'une des revendications 8 à 10, caractérisé en ce que le sel de phosphate est un phosphate diammonique ou un phosphate triammonique.

12. Procédé selon l'une des revendications 8 à 11, caractérisé en ce que la concentration molaire en terres rares dans la suspension est comprise entre 0,10 mole/l et 1,0 mole/l exprimée en élément terre rare.

13. Procédé selon l'une des revendications 8 à 12, caractérisé en ce que le mélange de la suspension aqueuse avec le phosphate est réalisé en contrôlant le pH du mélange obtenu à une valeur comprise entre 2 et 10, de préférence entre 6 et 9.

14. Procédé selon l'une des revendications 8 à 13, caractérisé en ce qu'on ajoute à la suspension ou au mélange suspension/phosphate un composé, d'un autre élément jouant le rôle de promoteur luminescence.

15. Procédé de préparation d'un phosphate mixte de lanthane, de cérium et de terbium à propriétés de luminescence, de formule générale (I) :

$$La_x Ce_y Tb_{(1-x-y)}PO_4$$

dans laquelle :

x est compris entre 0,4 et 0,6
x + y est supérieur à 0,8

et constitué de cristallites en forme d'aiguille ayant une longueur comprise entre 50 nm et 200 nm et une largeur comprise entre 10 nm et 50 nm, caractérisé en ce qu'on prépare un phosphate mixte par le procédé, selon l'une des revendications 8 à 14 et en ce qu'on calcine le précipité obtenu à une température supérieure à 600°C.

**Patentansprüche**

1. Gemischtes Phosphat von Lanthan, Cer und Terbium der allgemeinen Formel (I):

$$La_x Ce_y Tb_{(1-x-y)}PO_4$$

worin:

x zwischen 0,4 und 0,6 enthalten ist,
x + y größer 0,8 ist,

dadurch gekennzeichnet, daß es aus Kristalliten in Form von Nadeln mit einer Länge, die zwischen 50 nm und 200 nm enthalten ist und einer Größe, die zwischen 10 nm und 50 nm enthalten ist, besteht und dadurch, daß es bei der Oberflächenanalyse vom Typ XPS zwei Dubletts in der Energieskale, welche den 3D-Elektronen von Cer entsprechen und ein Fehlen des bei 32,7 eV gelegenen Satellits des ersten Peaks, zeigt.

2. Gemischtes Phosphat von Lanthan, Cer und Terbium der allgemeinen Formel (I):

$$La_x Ce_y Tb_{(1-x-y)}PO_4$$

worin:

x zwischen 0,4 und 0,6 enthalten ist,
x + y größer 0,8 ist,

dadurch gekennzeichnet, daß es aus Kristalliten in Form von Nadeln mit einer Länge, die zwischen 50 nm und 200 nm enthalten ist und einer Größe, die zwischen 10 nm und 50 nm enthalten ist, besteht und nach dem Kalzinieren bei einer Temperatur von 900°C unter Luft eine durch Kolorimetrie gemessene Helligkeit (L) von über 99 zeigt.

3. Phosphat nach Anspruch 1 oder 2, dadurch gekennzeichnet, daß der mittlere Durchmesser, der durch ein Aggregat von Kristalliten gebildeten Teilchen zwischen 1 μm und 15 μm, vorzugsweise zwischen 2 μm und 10 μm, enthalten ist.

4. Phosphat nach Anspruch 3, dadurch gekennzeichnet, daß die Verteilungszahl I der Größe der Teilchen zwischen 0,5 und 0,8 enthalten ist.

5. Phosphat nach einem der Ansprüche 1 bis 4, dadurch gekennzeichnet, daß nach Kalzinieren bei 900°C die Koordinaten a, b zwischen $0,7 < a^* < -0,1$ bzw. $0,5 < b^* < 1,5$ liegen.

6. Phosphat nach einem der Ansprüche 1 bis 5, dadurch gekennzeichnet, daß es wenigstens ein weiteres Element umfaßt, das einen Lumineszenz- oder Stabilisierungspromotor bildet.

7. Gemischtes Phosphat von Lanthan, Cer und Terbium mit Lumineszenzeigenschaften und der Formel (I):

$$La_xCe_yTb_{(1-x-y)}PO_4$$

worin:

   x zwischen 0,4 und 0,6 enthalten ist,
   x + y größer 0,8 ist,

dadurch gekennzeichnet, daß es aus Kristalliten in Form von Nadeln mit einer Länge, die zwischen 50 nm und 200 nm enthalten ist und einer Größe, die zwischen 10 nm und 50 nm enthalten ist, besteht und dadurch, daß es durch Kalzinieren bei einer Temperatur über 600°C eines Phosphates nach einem der vorhergehenden Ansprüche erhalten worden ist.

8. Verfahren zur Herstellung eines gemischten Phosphates nach einem der Ansprüche 1 bis 6, dadurch gekennzeichnet, daß es in der Herstellung einer wäßrigen Lösung eines gemischten Oxalats von Lanthan, Cer und Terbium oder einer Mischung von Oxalaten von Lanthan, Cer oder Terbium, im Vermischen dieser Suspension mit einem Phosphat, das wenigstens eine nicht neutralisierte saure Funktion umfaßt, im Verbringen der Suspension auf eine und Halten bei einer Temperatur über 70°C, dann im Abtrennen des Niederschlages und gegebenenfalls dem Trocknen besteht.

9. Verfahren nach Anspruch 8, dadurch gekennzeichnet, daß die Suspension von unlöslichen Salzen von Seltenerden und von Phosphationen bei einer Temperatur, die zwischen 70°C und 100°C liegt, gehalten wird.

10. Verfahren nach einem der Ansprüche 8 oder 9, dadurch gekennzeichnet, daß die Menge an Phosphationen, die mit der Suspension der unlöslichen Salze von Seltenerden vermischt wird, so bestimmt wird, daß ein Molverhältnis $PO_4^{3-}/SE$, das zwischen 1 und 5, vorzugsweise zwischen 1,5 und 3, liegt, erhalten wird.

11. Verfahren nach einem der Ansprüche 8 bis 10, dadurch gekennzeichnet, daß das Phosphatsalz ein Diammoniumphosphat oder ein Triammoniumphosphat ist.

12. Verfahren nach einem der Ansprüche 8 bis 11, dadurch gekennzeichnet, daß die molare Konzentration an Seltenerden in der Suspension zwischen 0,10 Mol/l und 1,0 Mol/l, ausgedrückt in Seltenerdeelement, liegt.

13. Verfahren nach einem der Ansprüche 8 bis 12, dadurch gekennzeichnet, daß die Mischung der wäßrigen Suspension mit dem Phosphat unter Regulierung des pH-Wertes der erhaltenen Mischung auf einen Wert, der zwischen 2 und 10, vorzugsweise zwischen 6 und 9, enthalten ist, durchgeführt wird.

14. Verfahren nach einem der Ansprüche 8 bis 13, dadurch gekennzeichnet, daß man zu der Suspension oder der Mischung Suspension/Phosphat eine Verbindung eines weiteren Elementes zufügt, das die Rolle des Lumineszenzpromotors spielt.

15. Verfahren zur Herstellung eines gemischten Phosphates von Lanthan, Cer und Terbium mit Lumineszenzeigenschaften, der allgemeinen Formel (I):

$$La_xCe_yTb_{(1-x-y)}PO_4$$

worin:

   x zwischen 0,4 und 0,6 enthalten ist,
   x + y größer 0,8 ist,

dadurch gekennzeichnet, daß es aus Kristalliten in Form von Nadeln mit einer Länge, die zwischen 50 nm und 200 nm enthalten ist und einer Größe, die zwischen 10 nm und 50 nm enthalten ist, besteht und dadurch, daß man ein gemischtes Phosphat durch das Verfahren nach einem der Ansprüche 8 bis 14 herstellt und dadurch, daß man den erhaltenen Niederschlag bei einer Temperatur über 600°C kalziniert.

## Claims

1. A mixed phosphate of lanthanum, cerium and terbium of general formula (I):

   $$La_x\,Ce_y\,Tb_{(1\text{-}x\text{-}y)}\,PO_4$$

   wherein:

   x is between 0.4 and 0.6 and
   x + y is greater than 0.8

   characterised in that it is formed by crystallites in needle form of a length of between 50 nm and 200 nm and a width of between 10 nm and 50 nm and that by surface analysis of X.P.S. type it has two doublets in the energy range corresponding to the electrons 3D of cerium and an absence of satellite situated at 32.7 ev of the first peak.

2. A mixed phosphate of lanthanum, cerium and terbium of general formula (I):

   $$La_x\,Ce_y\,Tb_{(1\text{-}x\text{-}y)}\,PO_4$$

   wherein:

   x is between 0.4 and 0.6 and
   x + y is greater than 0.8

   characterised in that it is formed by crystallites in needle form of a length of between 50 nm and 200 nm and a width of between 10 nm and 50 nm and after calcination at a temperature of 900°C in air having a clarity (L) as measured by colorimetry of higher than 99.

3. A phosphate according to claim 1 or claim 2 characterised in that the mean diameter of the particles formed by an aggregate of crystallites is between 1 $\mu$m and 15 $\mu$m, preferably between 2 $\mu$m and 10 $\mu$m.

4. A phosphate according to claim 3 characterised in that the dispersion index I of the size of the particles is between 0.5 and 0.8.

5. A phosphate according to one of claims 1 to 4 characterised in that after calcination at 900°C the co-ordinates a, b are respectively between -0.7 < a* < - 0.1 and 0.5 < b* < 1.5.

6. A phosphate according to one of claims 1 to 5 characterised in that it comprises at least one other element forming a stabilisation or luminescence promoter.

7. A mixed phosphate of lanthanum, cerium, and terbium having luminescence properties and of formula (I):

   $$La_x\,Ce_y\,Tb_{(1\text{-}x\text{-}y)}PO_4$$

   wherein:

   x is between 0.4 and 0.6, and
   x + y is greater than 0.8

   chracterised in that it is formed by crystallites in needle form of a length of between 50 nm and 200 nm and a width of between 10 nm and 50 nm and that it is obtained by calcination at a temperature of higher than 600°C of a phosphate according to one of the preceding claims.

8. A process for the production of a mixed phosphate according to one of claims 1 to 6 characterised in that it comprises producing an aqueous suspension of a mixed oxalate of lanthanum, cerium and terbium or a mixture of oxalates of lanthanum, cerium or terbium, mixing said suspension with a phosphate containing at most one non-neutralised acid function, raising the suspension to and holding it at a temperature above 70°C, then separating the precipitate and possibly drying it.

9. A process according to claim 8 characterised in that the suspension of insoluble salts of rare earths and phosphate ions is maintained at a temperature of between 70°C and 100°C.

10. A process according to one of claims 8 and 9 characterised in that the amount of phosphate ions mixed with the suspension of insoluble salts of rare earths is determined to obtain a $PO_4^{\equiv}$/RE molar ratio of between 1 and 5 and preferably between 1.5 and 3.

11. A process according to one of claims 8 to 10 characterised in that the phosphate salt is a diammonium phosphate or a triammonium phosphate.

12. A process according to one of claims 8 to 11 characterised in that the molar concentration of rare earths in the suspension is between 0.10 mole/l and 1.0 mole/l expressed in terms of rare earth element.

13. A process according to one of claims 8 to 12 characterised in that the mixture of the aqueous suspension with the phosphate is produced while controlling the pH of the mixture obtained to a value of between 2 and 10, preferably between 6 and 9.

14. A process according to one of claims 8 to 13 characterised in that a compound of another element performing the function of a luminescence promoter is added to the suspension or to the suspension/phosphate mixture.

**15.** A process for the preparation of a mixed phosphate of lanthanum, cerium and terbium with luminescence properties, of general formula (I):

$$La_x Ce_y Tb_{(1-x-y)} PO_4$$

wherein:

x is between 0.4 and 0.6, and
x + y is greater than 0.8

and formed by crystallites in needle form of a length of between 50 nm and 200 nm and a width of between 10 nm and 50 nm, characterised by preparing a mixed phosphate by the process according to one of claims 8 to 14 and by calcining the precipitate obtained at a temperature of higher than 600°C.

FIG. 2